Europäisches Patentamt

European Patent Office

Office européen des brevets

(11) Veröffentlichungsnummer : **0 051 145 B1**

# EUROPÄISCHE PATENTSCHRIFT

(45) Veröffentlichungstag der Patentschrift :
09.01.85

(21) Anmeldenummer : 81107480.6

(22) Anmeldetag : 21.09.81

(51) Int. Cl.⁴ : **G 11 B 23/04**, G 11 B 15/30

(54) Wickelkern für Magnetbandkassetten, insbesondere Kompaktkassetten und Magnetbandkassette mit mindestens einem Wickelkern.

(30) Priorität : 30.10.80 DEU 8028933
19.02.81 DEU 8104557
19.02.81 DEU 8104556

(43) Veröffentlichungstag der Anmeldung :
12.05.82 Patentblatt 82/19

(45) Bekanntmachung des Hinweises auf die Patenterteilung : 09.01.85 Patentblatt 85/02

(84) Benannte Vertragsstaaten :
AT BE CH DE FR GB IT LI NL SE

(56) Entgegenhaltungen :
DE-B- 2 100 889
DE-B- 2 119 005
FR-A- 2 233 675
US-A- 3 512 734
US-A- 4 123 010

(73) Patentinhaber : BASF Aktiengesellschaft
Carl-Bosch-Strasse 38
D-6700 Ludwigshafen (DE)

(72) Erfinder : Stumpfi, Werner, Dr.
Burbacher Strasse 24
D-6700 Ludwigshafen (DE)
Erfinder : Bettinger, Guenter
Kugelfangstrasse 46
D-6707 Schifferstadt (DE)
Erfinder : Engel, Friedrich
Hauptstrasse 54
D-6710 Frankenthal (DE)
Erfinder : Fitterer, Horst
Neckarpromenade 34
D-6800 Mannheim 1 (DE)
Erfinder : Kreimes, Norbert
Rheinecke 14
D-6700 Ludwigshafen (DE)
Erfinder : Pfefferkorn, Dietmar
Muehlweg 71
D-6944 Hemsbach (DE)
Erfinder : Schaeffer, Norbert
Vogelsang 19
D-6705 Deidesheim (DE)
Erfinder : Schmidts, Kurt
Kornstrasse 10
D-7640 Kehl (DE)

## Beschreibung

Die Erfindung betrifft einen Wickelkern für Magnetbandkassetten, insbesondere für Kompaktkassetten, bestehend aus einem Ringteil an dessen Innenumfang in radialer Richtung unbewegliche Mitnehmerzapfen zum Dreheingriff mit Außenstegen am Umfang eines Antriebsdorns vorgesehen sind, und an dessen Außenumfang der Magnetbandwickel auf- bzw. abwickelbar ist, und eine Magnetbandkassette mit einem solchen Wickelkern.

Obwohl die Abstände einander gegenüberliegender Mitnehmerzapfen am Wickelkern der Kassetten genormt sind, können insbesondere von der Geräteseite fertigungstoleranzbedingte Überschreitungen des Spiels zwischen Mitnehmerzapfen und Antriebsdorn festgestellt werden. Bei Kassettengeräten, in denen die Kassetten waagrecht betrieben werden und insbesondere bei Kassettengeräten, in denen die Kassetten senkrecht betrieben werden, ist ein periodisches, schlagartiges Verrutschen der Wickel in der Kassette während des Aufnahme- und/oder Wiedergabebetriebs der Kassette zu beobachten und Tonhöhenschwankungen sind wahrzunehmen.

### Stand der Technik

Aus der FR-A-2 233 675 ist eine Bandkassette zu Instrumentationszwecken bekannt. Der daraus bekannte Wickelkern setzt sich aus einer Nabe zum Eingriff des Antriebsdorns und einem Ringteil zum Auf- und Abrollen des Bandes zusammen. Dazwischen sind Verbindungseinrichtungen vorgesehen, die eine Radialverschiebung von Nabe und Ringteil gegeneinander gestatten und dadurch Abstandstole-ranzen zwischen den Antriebsachsen verschiedener Geräte ausgleichen sollen. Die Nabe ist dabei am Innenumfang mit unbeweglichen Mitnehmerzapfen versehen.

Aus der US-A-3 512 734 ist eine Filmkassette bekannt, in der ein Wickelkern für den Film mit federnden Kopplungsfingern ausgebildet ist, die derartig angeordnet und geformt sind, daß sich in Bezug auf eine bestimmte Form der Antriebsachse für den Wickelkern in einer Richtung eine Drehmitnahme des Wickelkerns und in der entgegengesetzten Richtung gerade keine Drehmitnahme, sondern eine Freigabe des Wickelkerns bewirkt wird, so daß die Antriebsachse sich dann relativ zum ruhenden Wickelkern dreht. Die Federeigenschaft der Kopplungsfinger dient nur dazu, selbsttätig von einem Betriebszustand in den anderen umschalten zu können. Außer ihrer Kopplungsfunktion zur Antriebsachse haben die Kopplungsfinger keinerlei Einfluß auf das am Wickelkern zur Wirkung kommende Drehmoment.

Mit der DE-OS 19 46 536 ist es noch für Filmkassetten bekannt, zur Ermöglichung von Überblendeffekten einen Filmrücktransport zu realisieren, bei dem gegenüber dem Vorwärtstransport ein erhöhtes Reibmoment ausgeübt wird. Bei der bekannten Super-Acht-Filmkassette mit einer Spule wurde die Spule am Innenrand mit zwei federnden, mit der Antriebswelle richtungsabhängig verschieden stark bremsend zusammenwirkenden Reibzungen versehen. Dabei spielt die jeweils mit der Antriebswelle in Wirkverbindung kommende Flächenausbildung der Zunge, die die unterschiedlichen Bremswirkungen bestimmende Rolle.

Außer der völlig verschiedenen Antriebswellen-Spulen-Antriebsverbindung ist auch die angestrebte Aufgabe bei dieser bekannten Anordnung völlig verschieden von Magnetbandzweispulenkassetten.

Gemäß DE-OS 20 56 932 ist es ferner bekannt, eine Bandkassette mit Bandwickeln auf Wickelkernen auszubilden, die auf Lagereinrichtungen mit Kugellagern drehbar sind. Um Toleranzen in der Stellung und Ausbildung der Antriebsspindeln auszugleichen, hat man einen Innenteil des Wickelkerns groß gegenüber dem Spindeldurchmesser ausgebildet, so daß Schrägstellungen der Spindel tolerierbar sind. Die Wickelkerne hat man zwischen den Kassettenwänden eng toleriert, um in Verbindung mit umfangreicheren Bandführungseinrichtungen einen Kontakt der Bandwickelflächen mit den Kassettenwänden zu verhindern. Für Kompaktkassetten sind diese Maßnahmen zu aufwendig, da sie für eine Massenherstellung nicht geeignet sind.

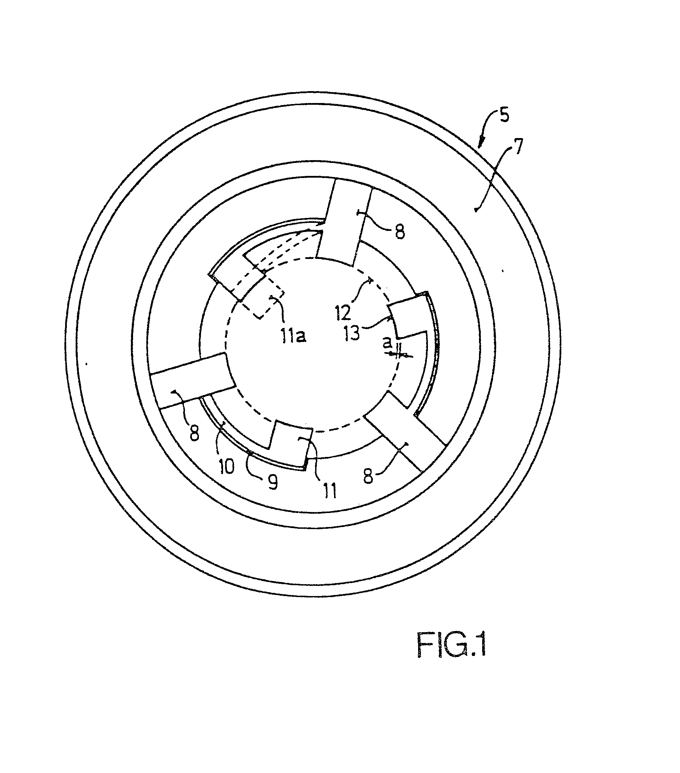

Beim Kompaktkassetten-System wird die Anpassung der Kassette an den Rekorder bzw. an dessen Antriebsdorne dadurch ermöglicht, daß die Wickelkerne in radialer und in axialer Richtung gegenüber dem Kassettengehäuse Spiel besitzen (Figur 1). Nach DIN 45 516 sind folgende Toleranzen vorgesehen:

Spiel in radialer Richtung min : 1 mm, max : 1,9 mm
Spiel in axialer Richtung max : 1,3 mm.

Das Spiel in radialer Richtung des Kerns, gegenüber dem Kassettengehäuse verursacht folgende Nachteile :

Beim schnellen Umspulen schlagen die Wickelkerne — vor allem auf der Abwickelseite — gegen das Gehäuse bzw. den Gehäusekragen und erzeugen ein deutlich hörbares Klapper-Geräusch.

Beim Spielbetrieb und senkrechter Lagerung der Kassette im Rekorder wälzt sich der Kern auf dem Gehäusekragen auf der Abwickelseite so ruckweise ab, daß schnelle Bandzugsänderungen entstehen, die wiederum zu Tonhöhenschwankungen führen.

0 051 145

Das Spiel in axialer Richtung ermöglicht es dem Wickelkern bzw. dem Bandwickel — wenn radiales Spiel vorhanden ist — sich schräg gegenüber dem Kassettenboden bzw. -deckel einzustellen, d. h. zu taumeln. Dadurch kann :

das Band unregelmäßig aufgewickelt werden. Der Bandwickel wird rauh, das Reibmoment kann stark zunehmen. Häufig kommt es sogar zum Festlaufen der Kassette

bei plötzlichem Start und Stop der Kassette das Band vom Bandwickel abrutschen (umklappen) und sich zwischen Bandwickel und Kassettengehäuse festklemmen.

Aufgabe der Erfindung

Es ist Aufgabe vorliegender Erfindung, das nachteilige Spiel zwischen Antriebsdorn und Wickelkern von der Kassettenseite her zu verringern bei herstellungmäßig günstiger Ausführung des Wickelkern.

Die Aufgabe der vorliegenden Erfindung wird für einen Wickelkern der eingangs genannten Art gemäß Anspruch 1 gelöst.

Die beweglich federnden Mitnehmerzapfen sind unabhängig von der Drehrichtung des Antriebsdorns gleich wirksam, üben ständig radiale bzw. axiale Druckkräfte auf den Antriebsdorn aus und ermöglichen auch eine Zentrierung des Wickelkerns und damit auch des ganzen Bandwickels zur Drehachse. Dadurch wird das am Wickelkern zur Wirkung kommende Antriebsmoment vergleichsmäßig, so daß sowohl die erwähnten Tonhöhenschwankungen, die auch als Wow- und Flutterstörungen bezeichnet werden, und Wickelkerngeräusche dadurch vermeidbar werden als auch etwaigen Unregelmäßgkeiten beim Bandaufwickeln und -abwickeln und plötzlichen Drehzahländerungen entgegengewirkt wird.

Außer den Wickelkernen selbst wird auch in der Verwendung solcher Wickelkerne in Kassetten, insbesondere in Kompaktkassetten ein wesentlicher Teil der Erfindung gesehen, so daß die Bandkassette mit mindestens einem Wickelkern gemäß Anspruch 1 selbst ebenfalls eine vorteilhafte Ausbildungsform der vorliegenden Erfindung anzusehen ist. Sehr vorteilhaft ist eine solche Kassette für Geräte verwendbar, in denen die Kassette in vertikaler Lage betrieben wird.

Vorstehende Kassette ist zweckmäßig ausgebildet, wenn die Federkonstante des beweglich federnden Mitnehmerzapfens im Bereich von etwa 10 N/m bis 400 N/m (1 P/mm bis 40 P/mm) liegt.

Eine weitere vorteilhafte Magnetbandkassette ist erfindungsgemäß gegeben, wenn der Federweg eines einzelnen oder von zwei diagonal gegenüberliegenden beweglichen Mitnehmerzapfen insgesamt etwa 0,6 bis etwa 0,8 mm beträgt.

Folgende weitere Ausgestaltungen der erfindungsgemäßen Wickelkerne sind möglich und zweckmäßig. Ein praktisch vorteilhafter Wickelkern ist gegeben, wenn der mindestens eine federnde Mitnehmerzapfen eine Federkonstante im Bereich von etwa 10 N/m bis 400 N/m (1 P/mm bis 40 P/mm) aufweist.

Zweckmäßig sind jeweils abwechselnd ein unbeweglicher Mitnehmerzapfen und ein federnder Mitnehmerzapfen und insbesondere je drei unbewegliche Mitnehmerzapfen und drei federnde Mitnehmerzapfen vorsehbar. Dadurch wird die Anordnung der Festzapfen und Federzapfen zentralsymmetrisch und es wird eine gute Zentrierung des Wickelkerns erreichbar. Es können auch vier unbewegliche und zwei federnde Mitnehmerzapfen oder in ungekehrten Anzahlen vorgesehen sein.

Grundsätzlich können die federnden Mitnehmerzapfen gemäß der Erfindung in horizontaler Ebene des Wickelkerns oder in vertikaler Richtung zum Wickelkern bewegliche Federn umfassen. Welche Anordnung davon bevorzugt wird, hängt auch von der Antriebswelle des Gerätes ab.

In bevorzugter Ausführung der Erfindung sind die beweglich federnden Mitnehmerzapfen zentralsymmetrisch zum Mittelpunkt des Kerns angeordnet und ihre Zahl beträgt mindestens drei.

In jedem Fall sind die Federkraft und die Form der federnden Mitnehmerzapfen so zu wählen, daß das Einlegen der Kassetten in ein Laufwerk unabhängig von der jeweiligen Antriebswellenform oder von einem eventuellen Axialspiel der Antriebswellen einwandfrei möglich ist, wie danach auch das Abnehmen.

Die Eigenbewegungen der Wickelkerne können durch einen einwandfreien Kraftschluß, der durch obigen Bereich für die Federkonstante hinreichend abgegrenzt ist, im wesentlichen vermieden werden. Es wird gleichzeitig gewährleistet, daß die Kassetten bzw. die Wickelkerne in problemloser Weise auf die Wickeldorne im Rekorder aufsetzbar und damit kuppelbar werden, und zwar im wesentlichen unabhängig von den jeweiligen Abmessungen der Wickeldorne, die erfahrungsgemäß auch starken Unterschieden bei Geräten verschiedener Hersteller unterliegen.

In weiterer Ausgestaltung beträgt der Federweg des einzelnen beweglich federnden Mitnehmerzapfens insgesamt etwa 0,6 bis etwa 0,8 mm.

Vorteilhaft können die beweglichen oder federnden Mitnehmerzapfen sich in horizontaler Ebene des Wickelkerns erstreckende Federn umfassen.

In praktisch günstiger Ausführung können mindestens jeweils zwei, mindestens bewegliche, Mitnehmerzapfen auf einem gemeinsamen Träger vorgesehen sein, der gegenüber dem Ringteil federnd gelagert ist. Dadurch vereinfacht sich die Herstellung der Einzelteile des Wickelkerns.

3

In weiterer Ausbildung können je zwei federnde Mitnehmerzapfen auf je einem Schwenkteil angeordnet sein, der relativ zum Ringteil schwenkbar ist.

In zweckmäßiger Ausführung können die Innen- und Außenteile des Wickelkerns aus unterschiedlichem Material, vorzugsweise der Innenteil aus elastischem und der Außenteil aus unelastischem Material bestehen. Dadurch kann erreicht werden, daß der Innenteil beim Ein- oder Austritt des Antriebsdorns nachgibt.

Einzelheiten der Erfindung sind anhand von in der Zeichnung dargestellten Ausführungsbeispielen nachfolgend beschrieben.

In der Zeichnung stellen dar :

Figur 1   einen Wickelkern mit drei festen und drei damit federnd verbundenen Mitnehmerzapfen

Figur 2   einen Wickelkern mit bogenförmig federnd vorgespannten Mitnehmerzapfen

Figur 3   einen Wickelkern mit mittels Schraubenfedern abgestützten Mitnehmerzapfen

Figur 4   einen Wickelkern mit mittels Blattfedern abgestützten Mitnehmerzapfen

Figur 5A   ein Gleichlauffehler-Meßdiagramm von konventionellen Wickelkernen

Figur 5B   eine Meßdiagramm gemäß Figur 5A jedoch mit erfindungsgemäß ausgebildeten Wickelkernen

Figur 6   einen Wickelkern nach der Erfindung mit asymmetrischen beweglichen Mitnehmerzapfen

Figur 6A   einen Wickelkern nach Figur 1 mit zwei asymmetrischen, beweglichen Mitnehmerzapfen auf einem Träger

Figur 7   einen Wickelkern mit zwei Trägern symmetrisch angeordnet mit jeweils zwei beweglichen Mitnehmerzapfen

Figur 8   einen Wickelkern mit vier beweglichen Einzelzapfen, die jeweils über Blattfedern am Ringteil befestigt sind

Figur 9   einen Wickelkern mit zwei unbeweglichen Zapfen, die jeweils mit zwei beweglichen Zapfen ausgebildet sind

Figur 10   einen Wickelkern mit zwei Paar beweglichen Zapfen, die einzeln über Blattfedern am Ringteil befestigt sind

Figur 11   einen Wickelkern mit beweglichen Zapfen auf schwenkbar gelagerten Schwenkteilen.

In Figur 1 ist ein ringförmiger Wickelkern 5, wie er in Kompaktkassetten prinzipiell verwendet wird, dargestellt. Zusätzlich sind Federeinrichtungen vorgesehen, die drei der normalerweise sechs Mitnehmerzapfen gegenüber dem Ringkörper 7 federnd lagern. Normalerweise sind alle Zapfen wie die Festzapfen 8 einstückig mit dem Ringkörper 7 starr verbunden. In dieser speziellen Wickelkernausführung ist ein Teil des Innenumfangs des Ringkörpers 7 in Form einer Bogennut 9 hinterschnitten, so daß ein Federverbindungsstück 10 zum Nachbarzapfen 11 entsteht, wodurch der Nachbarzapfen 11 in Radialrichtung beweglich wird, was mit 11a gestrichelt angedeutet ist. Der Innenkreis 12 der Festzapfen ist ebenfalls eingezeichnet, und verglichen damit springt die Vorderkante 13 der Federzapfen 11 um den Abstand a geringfügig über den Innenkreis 12 vor. Normalerweise handelt es sich bei der Größe dieses Vorsprungs um wenige Zehntel Millimeter. Die Dimensionierung kann jedoch in jedem Fall geeignet vorgenommen werden. Die Anordnung aller Zapfen 8 und 11 ist zentralsymmetrisch zum Mittelpunkt des Ringkörpers 7, so daß außer einer Spielverringerung zum nicht dargestellten Wickeldorn des Gerätes auch eine Zentrierwirkung des Wickelkerns und damit des ganzen Bandwickels erreicht wird. Die Dimensionierung der Federzapfen in Axialrichtung der Figuren ist beliebig, ist nach oben jedoch durch die lichte Weite zwischen den Lagerringen der Kassette begrenzt. Sie richtet sich ferner nach dem Werkstoff, damit eine ausreichende Anlage der Federzapfen am Wickeldornumfang sichergestellt ist und Kräfte in einer Größe übertragen werden können, die den Bandwickel im wesentlichen zuverlässig in zentraler Lage halten.

Der Wickeldorn des Geräts ist im folgenden auch als Antriebswelle oder Antriebsdorn bezeichnet.

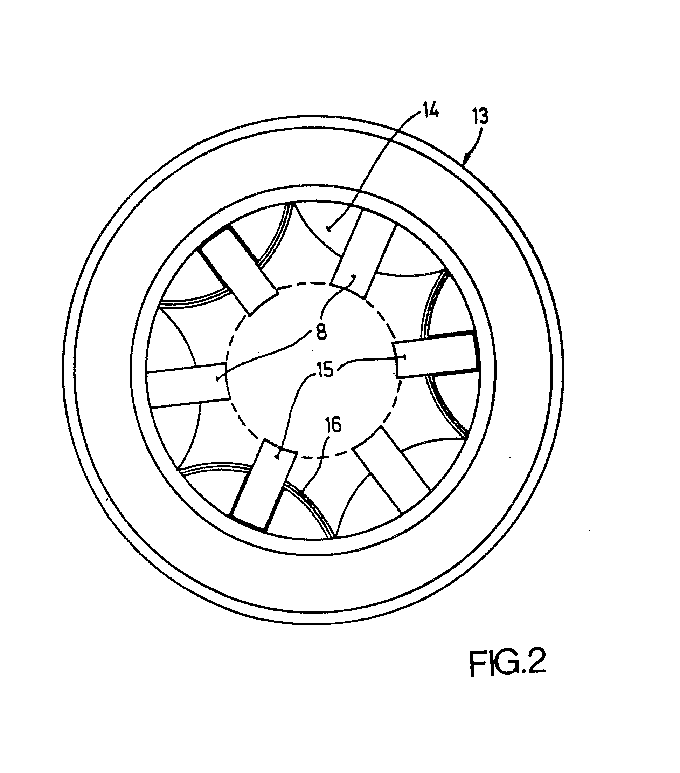

Figur 2 zeigt einen Wickelkern 13, der sich durch Kreisabschnittfortsätze 14, die nach innen ragen und die die Festzapfen 8 und Federzapfen 15 aufnehmen, auszeichnet. Die Federzapfen 15 sind in der Mitte von Bogenfedern 26 angeordnet und an diesen befestigt. Es wäre auch denkbar, solche Bogenfedern 16 ohne die Fortsätze 14 zu verwenden.

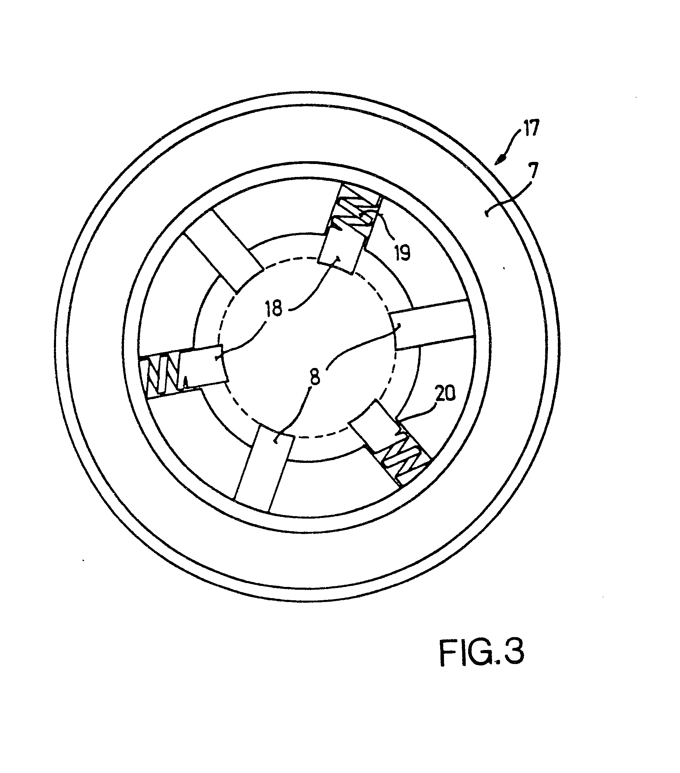

In Figur 3 ist ein weiterer Wickelkern 17 mit Festzapfen 8 und Federzapfen 18 dargestellt, wobei die Federzapfen 18 über schraubenartige Federn 19 am Innenumfang des Ringkörpers 7 abgestützt sind, wobei Nuten 20 zur Führung der Federzapfen 18 bei ihrer Radialbewegung dienen.

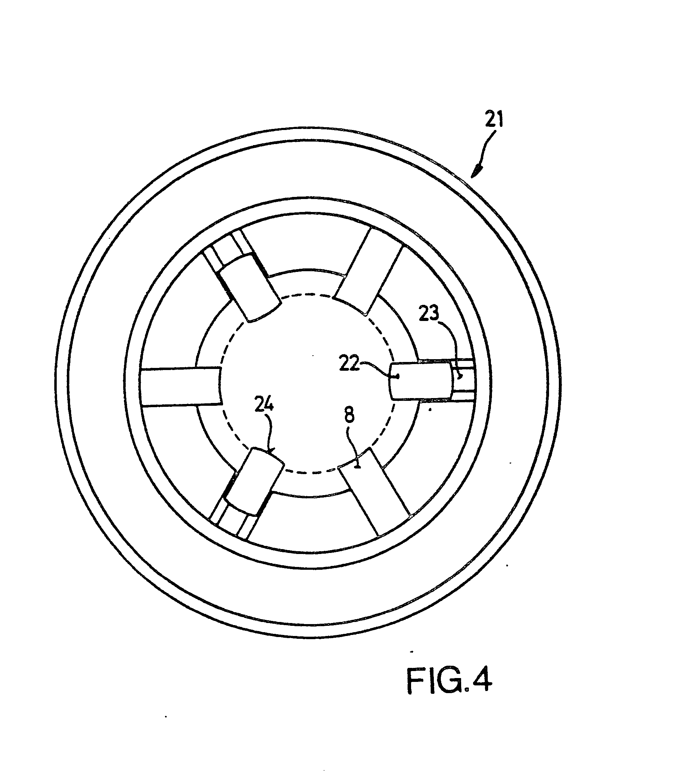

In einer weiteren Ausführung (Fig. 4) ist ein Wickelkern 21 mit Festzapfen 8 und Federzapfen 22 vorgesehen, wobei horizontal flachliegende Blattfedern 23 den Federzapfen 22 auch eine Axialbeweglichkeit verleihen, was z. B. beim Aufsetzen und Abnehmen der Kerne auf den Wickeldorn des Geräts zur Wirkung kommt. Die Federkraft wird durch Auslenkung der Federzapfen 22 aus der horizontalen Symmetrieebene wirksam. An der Vorderseite 24 können die Federzapfen 22 ballig ausgebildet sein, was auch für alle anderen Ausführungsformen gilt.

Die Herstellung der Wickelkerne erfolgt zweckmäßig einstückig aus geeignetem Kunststoffmaterial im Spritzguß. Selbstverständlich sind auch andere Verfahren, wie z. B. Pressen einsetzbar.

Die Federkraft der Federelemente der Federzapfen ist so einzustellen, daß der Wickelkern kraftschlüssig auf dem Wickeldorn gehalten ist. Die Zahl der Federzapfen ist grundsätzlich beliebig. Eine Folge von abwechselnd Fest- und Federzapfen ist vorteilhaft, doch hat auch eine zentralasymmetrische Anordnung die obenerwähnten Vorteile einer Wickelfixierung. Grundsätzlich ist es natürlich auch möglich, neben Festzapfen irgendwelche geeignet geformte Federeinrichtungen am Ringkörper zu verwenden, ohne daß diese ebenfalls Zapfenform besitzen müssen.

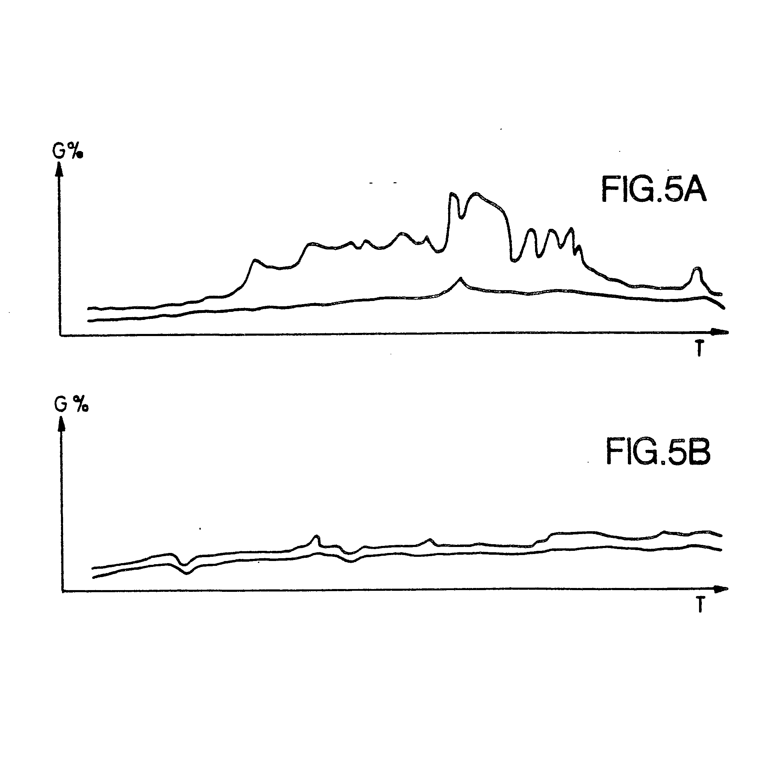

In der Zeichnung sind die Hüllkurven der Gleichlauffehler-Zeit-Diagramme in Fig. 5A und 5B dargestellt.

Figur 5A zeigt eine Meßkurve an einer Kassette die mit Wickelkernen mit gleichem Innendurchmesser aller Zapfen ausgerüstet war. Figur 5B zeigt das gleiche an einer Kassette mit Wickelkernen gemäß Figur 1. Im Ergebnis verursachten die Kassetten ohne die erfindungsgemäßen Wickelkerne einen über dreimal so großen durchschnittlichen Gleichlauffehler G.

Wie auch aus dem Vergleich der Kurven 5A und 5B erkennbar ist, zeigt Figur 5B im wesentlichen die gerätebedingten Gleichlauffehler, während Figur 5A also folgerichtig im wesentlichen die kassettenbedingten Gleichlauffehler zeigt. Diese kassettenbedingten Gleichlauffehler werden also offensichtlich durch die zusätzlichen Eigenbewegungen der Wickelkerne relativ zum Antriebsdorn (also die Unrundheit) hervorgerufen und erfindungsgemäß nahezu vollständig beseitigt.

Die Meßbedingungen waren :

Meß-Cassettenrecorder mit Senkrechtbetrieb :
Sharp Optonica RT 3838
Schreiber : Brüel + Kjaer Levelrecorder Typ 2305
Schreibgeschwindigkeit 63 mm/sec
Wow + flutter Meter : Woelke ME 105
(Meßfrequenz : 3150 Hz (nach IEC (94) Bewertungsfilter ausgeschaltet)
Der Abstand a der Federzapfen 11 gegenüber dem Innenkreis betrug ca. 0,15 mm.

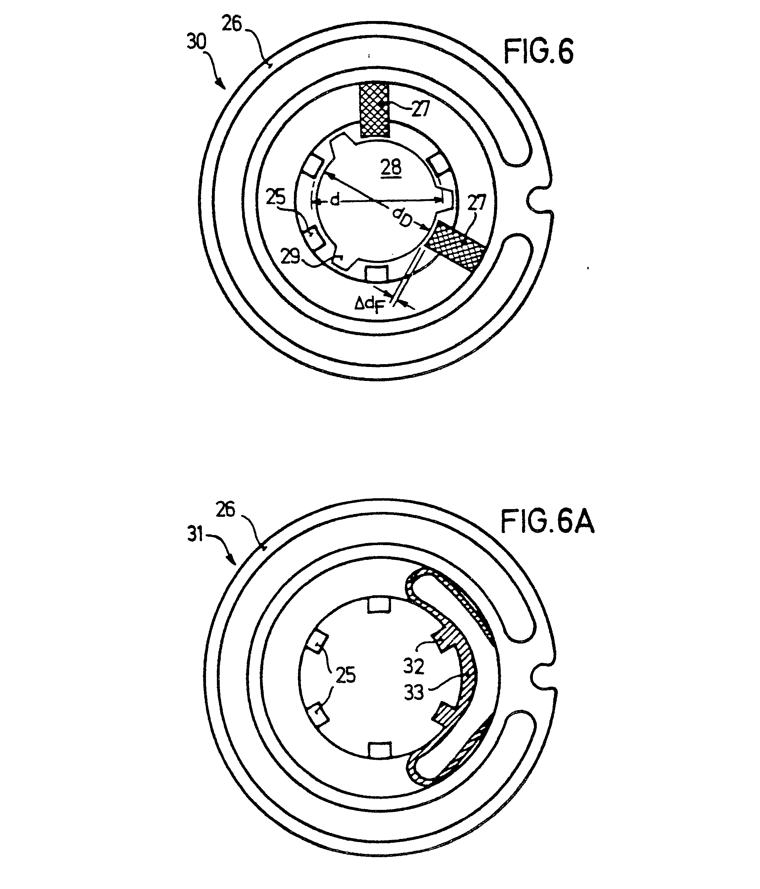

Figur 6 zeigt einen im wesentlichen handelsüblichen Wickelkern mit vier von sonst sechs unbeweglichen Mitnehmerzapfen, im folgenden als Festzapfen 25 bezeichnet. Die Festzapfen 25 sind am Ringteil 26 starr befestigt, da der Kern aus Kunststoff im Spritzgußverfahren einteilig geformt ist. Gegenüber von je einem von zwei Festzapfen 25 ist ein beweglicher Zapfen 27, im folgenden als Federzapfen bezeichnet, angeordnet, so daß sich in bezug auf eine Mittellinie eine unsymmetrische Anordnung der Federzapfen 27 ergibt. Im Eingriff mit dem Wickelkern 30 ist ein Antriebsdorn 28 dargestellt, der zum Antrieb mit Fortsätzen 29 zwischen die Zapfen 25 und 27 eingreift. Der Durchmesser des Antriebsdorns 28 ist mit « $d_D$ », der Innendurchmesser der Festzapfen 25 mit « d » bezeichnet. Die Federzapfen 27 ragen mit dem Abstand $d_F$ über den Innenkreis mit dem Durchmesser d hinaus. Die Größe des Abstandes $d_F$ beträgt bei Verwendung von etwa diagonal gegenüberliegenden Federzapfen 27 etwa 0,3 bis ca. 0,4 mm. Bei Verwendung nur eines Festzapfens 27 wird der doppelte Abstand benötigt. Nicht diagonale Anordnungen benötigen einen zwischen den Bereichen 0,3 bis 0,4 mm und 0,6 bis 0,8 mm liegenden Abstand.

Grundsätzlich ergibt sich der Abstand durch die verschiedenen Durchmesser der Antriebsdorne der Rekorder. Ein Vergleich von 17 verschiedenen Rekordern ergab eine Differenz zwischen $d_D$ min = 7,35 mm und $d_D$ max = 7,65 mm von 0,3 mm. Unter Berücksichtigung der aus der DIN Norm vorgegebenen Innendurchmesser d der Wickelkerne von 7,8 bis 8,0 mm ergibt sich, bezogen auf den Mindestdurchmesser der Antriebsdorne von $d_D$ = 7,35 mm ein erfindungsgemäß zu kompensierendes Spiel s zwischen 0,45 und 0,65 mm.

Wird nun noch die erfindungsgemäße Auflage einer auf den Rekorderantriebsdorn vom Wickelkern wirksamen Federkraft gemacht, so ergibt sich bei einem durchschnittlichen Mindestfederweg von 0,15 mm ein Gesamtfederweg von $d_F$ = 0,6 bis 0,8 mm.

Im folgenden werden weitere Ausführungen von Wickelkernen beschrieben.

Um in Figur 6 die Federkraft zu realisieren, können die Federzapfen 27 aus elastischem, z. B. gummi- oder schaumstoffartigen Material bestehen und geeignet, z. B. durch Kleben, am Ringteil 26 befestigt sein.

Die Federzapfen 27 können an ihren Befestigungsenden auch mit Blatt- oder Schraubenfedern aus Kunststoff versehen sein, wobei eine im wesentlichen radiale Federwirkung erwünscht ist.

Figur 6A zeigt einen Wickelkern 31 mit ebenfalls vier Festzapfen 25 und zwei Federzapfen 32, die jedoch auf einem flexiblen, bügelförmigen Träger 33 angeordnet sind. Der Träger 33 kann geschlossen oder hinten offen sein und ist zweckmäßig hinten am Ringteil 26 befestigt. Damit ergibt sich wiederum eine einseitige, unsymmetrische Federbelastung für den Antriebsdorn 28. Die Ausführung der Figur 6A ist die erste zweiteilige Form eines Wickelkerns, der erfindungsgemäß besondere Bedeutung zukommt. So können Ringteil 26 mit Festzapfen 25 einteilig aus hartem Kunststoff und der Träger 33 mit Federzapfen 32 aus weichem, elastischem Kunststoff hergestellt und geeignet miteinander verbunden werden, z. B. über Klemm- oder Schnappverschluß oder Kleben, Ultraschallschweißen usw.

Die Federkonstante jedes Federzapfens sollte im Bereich von etwa 1 P/mm bis ca. 40 P/mm (0,3 cN/0,3 mm bis ca. 12 cN/0,3 mm) liegen, wobei cN (Centinewton) Hundertstel Newton und P Pond bedeuten. Diese Federkonstante ist mit vielen material- und formbedingt elastischen Kunststoffmaterialien erreichbar, z. B. mit fast allen kautschukartigen oder gummielastischen Materialien, aber auch mit dünnen flexiblen Hartkunststoffen wie Polyamid, Polypropylen usw.

5

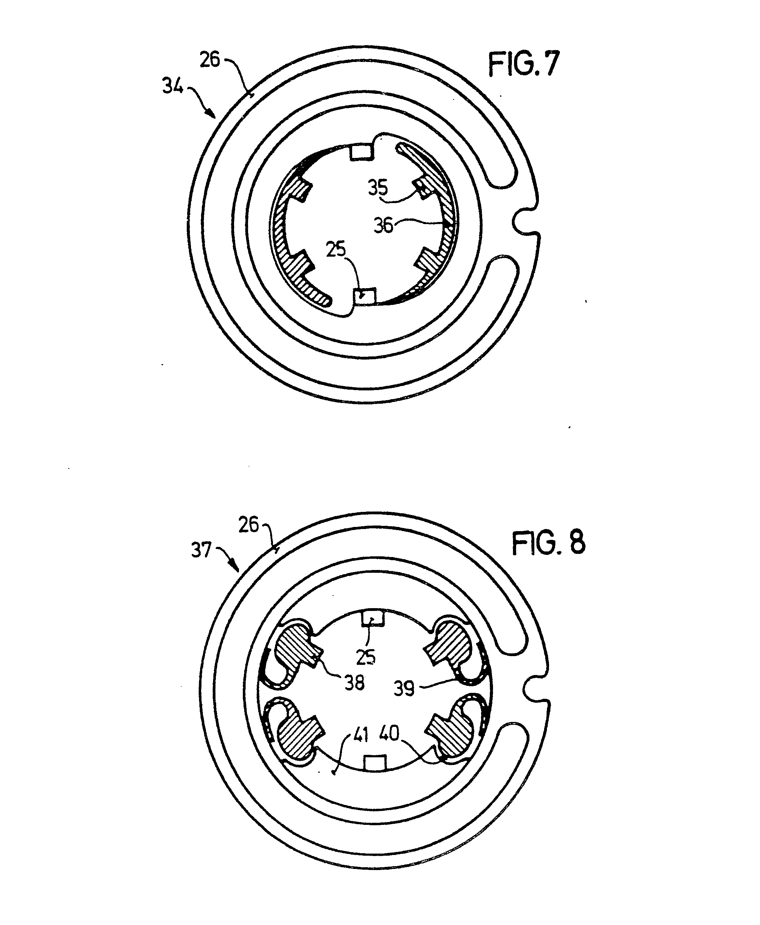

Figur 7 zeigt einen Wickelkern 34 mit zwei diagonal gegenüberliegenden Festzapfen und zentralsymmetrisch zum Mittelpunkt des Kerns 34 liegenden Federzapfen 35, wobei je zwei Federzapfen 35 auf einem gemeinsamen, jedoch einseitig befestigten, flexiblen Träger 36 angeordnet sind. Der Träger 36 ist unterschiedlich dick ausgebildet, und durch die einseitige Befestigung ist an jedem der Federzapfen etwa dieselbe Federkraft einstellbar.

Figur 8 ist eine weitere Variante, in der ein Wickelkern 37 mit zwei diagonalliegenden Festzapfen 25 ausgeführt ist. Vier symmetrisch angeordnete, federnde Zapfen sind diesmal als Einzel-Federzapfen 38 ausgebildet. Die Federzapfen 38 werden von Einzelfedern 39 gegenüber dem Ringteil 26 abgestützt. Die Einzelfedern 39 können als dünne, gebogene Kunststoffedern ausgebildet sein, an denen der Federzapfen 38 hängt. Die Biegung der Kunstoffedern in einem Radius bewirkt eine Verringerung der wirksamen Federkraft. Die Federzapfen 38 werden in Richtung der Wickelkernmitte hingebogen. Käfigartige Ausnehmungen 40 am Innenteil des Ringteiles 26 wirken als Wegbegrenzung für die Federzapfen. Eine Einzelanbringung der Federzapfen 38 ist möglich. Zweckmäßig kann auch eine getrennte Herstellung eines gemeinsamen Innenteils 41 mit Fest- und Federzapfen 25 bzw. 38 erfolgen, der innen am Ringteil 26 befestigt wird.

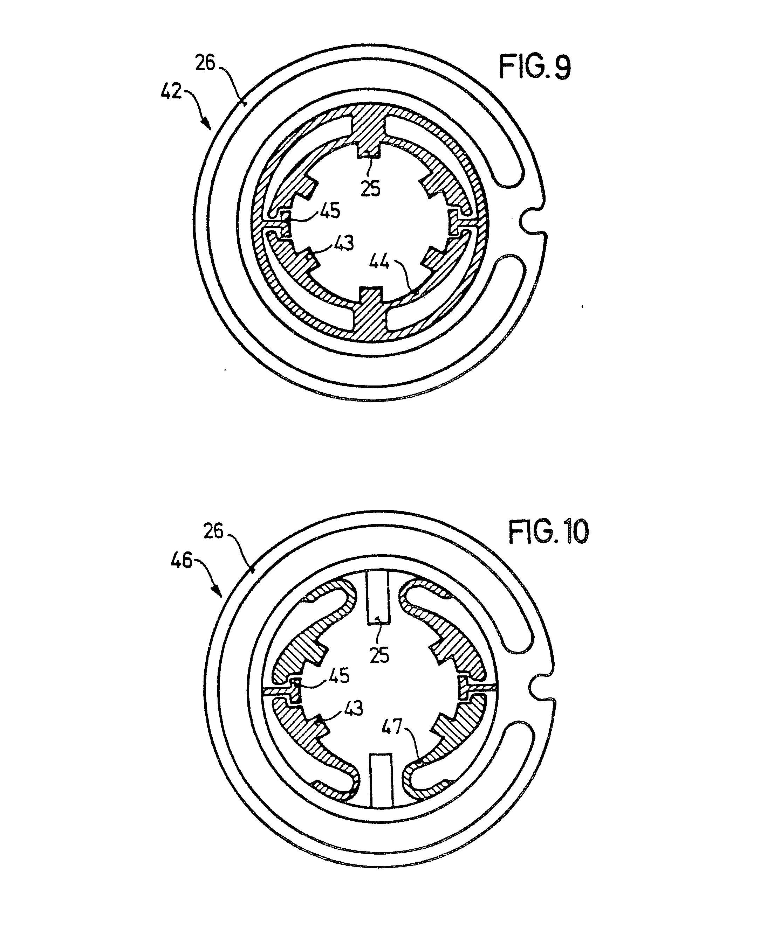

Figur 9 zeigt einen Wickelkern 42 mit zwei diagonalliegenden Festzapfen 25, an denen je zwei Federzapfen 43 über Federelemente 44 befestigt oder angeformt sind. Die aufwärts gebogenen Federelemente 44 erteilen den Federzapfen 43 die Federkraft. Feste Anschläge 45 dienen als Begrenzungen für die Federwege.

Figur 10 zeigt als Variante einen Wickelkern 46, bei dem nach rückwärts gebogene Blattfederelemente 47 ähnlich Figuren 6A und 8 verwendet werden. Gleiche Teile sind mit denselben Bezugszeichen versehen. In diesen Fällen wird wiederum eine zwei- oder dreiteilige Herstellung der Wickelkerne 42 und 46 als günstig angesehen.

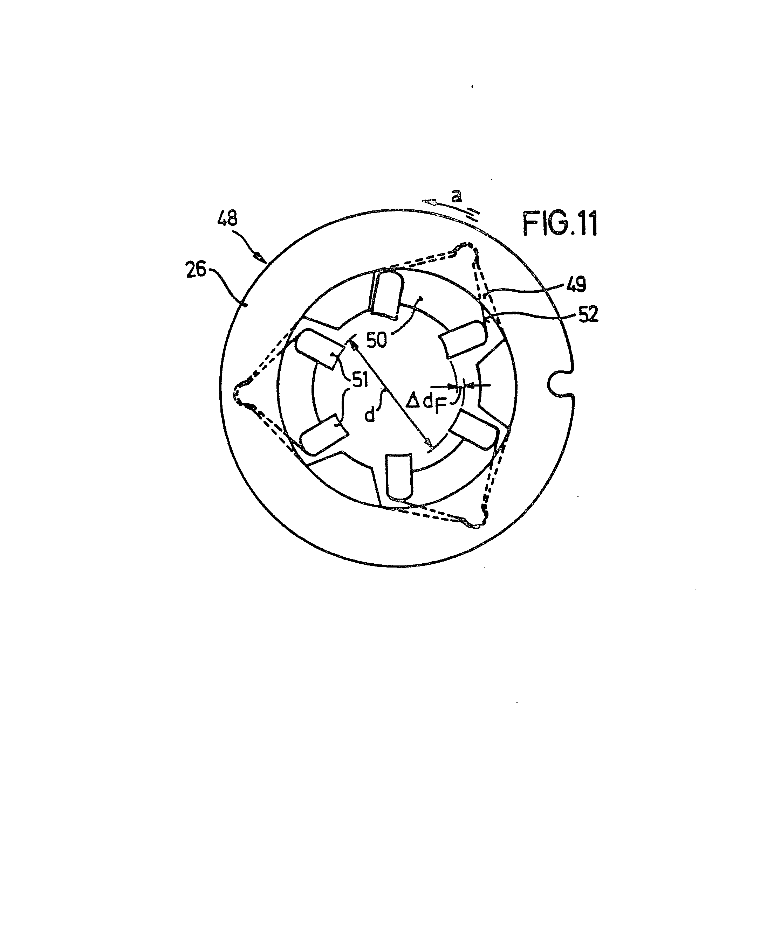

Figur 11 zeigt einen Wickelkern 48 mit Ringteil 26, etwa dreieckförmigen Ausschnitten 49 im Ringteil 26 und in den Ausschnitten 49 schwenkbar angelenkte, dreieckförmige Schwenkteile 50 befindlich sind. Die Größe der Ausschnitte 49 ist in Umfangsrichtung gesehen größer als die Größe der Schwenkteile 50. Auf jedem Schwenkteil 50 sind bewegliche Zapfen 51 angeordnet, im dargestellten Fall zwei Zapfen. Ein Schwenkteil 50 ist im ausgelenkten Zustand bei Drehrichtung gemäß Pfeil a gezeigt. Die vordere Schrägkante des Schwenkteils 50 kommt dabei in Anlage an der vorderen Ausschnittwand, während die hintere Schrägkante 52 von der hinteren Schrägkante des Ausschnitts abhebt. Durch diese Schwenkbewegung tritt der in Pfeilrichtung a gesehen hintere Zapfen 51 über den Innenkreis mit dem Radius d um den Betrag $d_F$ hinaus und verringert somit das Spiel zu einem nicht dargestellten Antriebsdorn unter Ausübung einer hierbei von der Drehgeschwindigkeit abhängigen Andruckkraft. Die Ausbildungen des Ausschnitts 49 und des Schwenkteils 50 sind symmetrisch, so daß eine Spielverkleinerung in beiden Drehrichtungen erfolgt.

Die Schwenkteile 50 können durch Klemmbefestigung im Ringteil 26 befestigt sein. Durch die zentralsymmetrische Anordnung von drei gleichgeformten Schwenkteilen wird auch eine Zentrierung des Wickelkerns 48 zum Antriebsdorn erreicht. Grundsätzlich sind auch andere Formen von Schwenkteilen und dazugehörigen Ausschnitten denkbar. So reichen z. B. auch zwei Schwenkteile, die einander diagonal gegenüberliegen, zur Zentrierung aus.

Praktisch wurde in Messungen festgestellt, wie sehr sich eine Spielverringerung zwischen Wickelkern und Antriebsdorn auswirkt. Es wurden folgende Meßergebnisse erhalten.

Gemessen wurde auf einem Kassettengerät der Firma Pioneer GT 700 im Senkrechtbetrieb :

| Kernspiel (mm) | Wow u. Flutter (%) |
|---|---|
| 0,5 | 0,65 |
| 0,2 | 0,40 |
| 0,08 | 0,28 |
| 0 | 0,26 |

Als Ergebnis wurde festgestellt, daß bereits bei einer erfindungsgemäßen Verringerung des Spiels von 0,5 mm bis 0,8 mm mehr als eine Halbierung der Wow- und Flutterstörungen erreichbar war.

**Ansprüche**

1. Wickelkern für Magnetbandkassetten, insbesondere für Kompaktkassetten, bestehend aus einem Ringteil (7), an dessen Innenumfang in radialer Richtung unbewegliche Mitnehmerzapfen (8, 25) zum Dreheingriff mit Außenstegen (29) am Umfang eines Antriebsdorns (28) vorgesehen sind, und an dessen Außenumfang der Magnetbandwickel auf- bzw. abwickelbar ist, dadurch gekennzeichnet, daß zusätzlich zu den unbeweglichen Mitnehmerzapfen (8, 25) in radialer bzw. in axialer und radialer Richtung beweglich federnde Mitnehmerzapfen (11, 15, 18, 22, 27, 32, 35, 38, 43, 51) vorgesehen sind, die drehrichtungsunabhängig ständig radiale bzw. axiale und radiale Druckkräfte auf den Umfang des Antriebsdorns (28) ausüben zur Spielverkleinerung zwischen Wickelkern und Antriebsdorn.

2. Wickelkern nach Anspruch 1, dadurch gekennzeichnet, daß der mindestens eine federnde Mitnehmerzapfen (11, 15, 18, 22, 27, 32, 35, 38, 43, 51) eine Federkonstante im Bereich von etwa 10 N/m bis 400 N/m (1 Pond/mm bis 40 Pond/mm) aufweist.

3. Wickelkern nach Ansprüchen 1 oder 2, dadurch gekennzeichnet, daß jeweils abwechselnd ein unbeweglicher Mitnehmerzapfen (8) und ein federnder Mitnehmerzapfen (11, 15, 18, 22) und insbesondere je drei unbewegliche Mitnehmerzapfen (8) und drei federnde Mitnehmerzapfen (11, 15, 18, 22) vorgesehen sind (Fig. 1 bis 4).

4. Wickelkern nach Ansprüchen 1 oder 2, dadurch gekennzeichnet, daß vier unbewegliche Mitnehmerzapfen (25) und zwei federnde Mitnehmerzapfen (27, 32) vorgesehen sind (Fig. 6, 6A).

5. Wickelkern nach Ansprüchen 1 oder 2, dadurch gekennzeichnet, daß zwei unbewegliche Mitnehmerzapfen (25) und vier federnde Mitnehmerzapfen (35, 38, 43) vorgesehen sind (Fig. 7 bis 10).

6. Wickelkern nach einem der Ansprüche 1 bis 5, dadurch gekennzeichnet, daß die beweglichen Mitnehmerzapfen (11, 15, 18, 22) sich in horizontaler Ebene des Wickelkerns (5, 13, 17, 21) erstreckende Federn (10, 16, 19, 23) umfassen (Fig. 1 bis 4).

7. Wickelkern nach einem der Ansprüche 1 bis 6, dadurch gekennzeichnet, daß die federnden Mitnehmerzapfen (18, 22) in axialer Richtung zum Wickelkern (17, 21) bewegbare Federn (19, 23) umfassen (Fig. 1 bis 4).

8. Wickelkern nach einem der Ansprüche 1 bis 3 und 5 bis 7, dadurch gekennzeichnet, daß die beweglich federnden Mitnehmerzapfen (11, 15, 18, 22) zentralsymmetrisch zum Mittelpunkt der Kerns (5, 13, 17, 21) angeordnet sind und ihre Zahl mindestens drei beträgt.

9. Wickelkern nach einem oder mehreren der Ansprüche 1 bis 8, dadurch gekennzeichnet, daß der Federweg eines einzelnen oder von zwei diagonal gegenüberliegenden beweglich federnden Mitnehmerzapfen (27, 32, 35, 38, 43, 51) insgesamt etwa 0,6 bis 0,8 mm beträgt (Fig. 6 bis 11).

10. Wickelkern nach einem der Ansprüche 1 bis 9, dadurch gekennzeichnet, daß mindestens jeweils zwei beweglich federnde Mitnehmerzapfen (32, 35) auf einem gemeinsamen Träger (33, 36) vorgesehen sind, der gegenüber dem Ringteil (26) federnd gelagert ist (Fig. 6A, 7).

11. Wickelkern nach einem der Ansprüche 1 bis 10, dadurch gekennzeichnet, daß je zwei federnde Mitnehmerzapfen (51) auf je einem Schwenkteil (50) angeordnet sind, der relativ zum Ringteil (26) schwenkbar ist (Fig. 11).

12. Wickelkern nach einem der Ansprüche 1 bis 11, dadurch gekennzeichnet, daß der Wickelkern aus einem Außenteil und wenigstens einem Innenteil (33, 36, 39, 44, 47, 50) mit den federnden Mitnehmerzapfen (32, 35, 38, 43, 50) besteht, wobei Außen- und Innenteil miteinander koppelbar sind und dazwischen nach Kopplung Spiel vorhanden ist (Fig. 6A-11).

13. Wickelkern nach Anspruch 12, dadurch gekennzeichnet, daß die unbeweglichen Mitnehmerzapfen (25) am Außenteil und die federnden Mitnehmerzapfen (32, 35, 38, 43, 50) an einem gegenüber dem Ringteil (26) federnden Innenteil (33, 36, 39, 44, 47, 50) vorgesehen sind (Fig. 6A-11).

14. Magnetbandkassette, insbesondere Kompaktkassette, für ein Gerät, in dem die Kompaktkassette in vertikaler Lage betrieben wird, wobei die Kassette mindestens einen Wickelkern umfaßt, der aus einem Ringteil (7) besteht, an dessen Innenumfang in radialer Richtung unbewegliche Mitnehmerzapfen (8, 25) zum Dreheingriff mit Außenstegen (29) am Umfang wenigstens eines geräteseitigen Antriebsdorns (28) vorgesehen sind, und an dessen Außenumfang der Magnetbandwickel auf- bzw. abwickelbar ist, dadurch gekennzeichnet, daß jeder Wickelkern zusätzlich zu den unbeweglichen Mitnehmerzapfen (8, 25) in radialer bzw. axialer und radialer Richtung beweglich federnde Mitnehmerzapfen (11, 15, 18, 22, 27, 32, 35, 38, 43, 51) vorgesehen sind, die drehrichtungsunabhängig ständig radiale bzw. axiale und radiale Druckkräfte auf den Umfang des Antriebsdorns (28) ausüben zur Spielverkleinerung zwischen Wickelkern und Antriebsdorn.

15. Magnetbandkassette nach Anspruch 14, gekennzeichnet durch eine Federkonstante des beweglich federnden Mitnehmerzapfens (11, 15, 18, 22, 27, 32, 35, 38, 43, 51) im Bereich von etwa 10 N/m bis 400 N/m (1 Pond/mm bis 40 Pond/mm).

16. Magnetbandkassette nach Anspruch 14 oder 15, dadurch gekennzeichnet, daß der Federweg eines einzelnen oder von zwei diagonal gegenüberliegenden beweglichen Mitnehmerzapfen (27, 32, 35, 38, 43, 51) insgesamt etwa 0,6 bis etwa 0,8 mm beträgt.

## Claims

1. A hub for magnetic tape cassettes, especially for compact cassettes, comprising a ring member (7) on whose inner periphery there are arranged teeth (8, 25), which are immovable in the radial direction, for driving engagement by projecting keys (29) on a drive spindle (28), and onto and from whose outer periphery the magnetic tape can be wound and unwound, wherein there are provided, in addition to the immovable teeth (8, 25), spring-biassed teeth (11, 15, 18, 22, 27, 32, 35, 38, 43, 51) which are movable in the radial direction or in the radial and axial directions and which, regardless of the direction of rotation, constantly exert radial or both axial and radial pressures on the drive spindle (28) so as to reduce the play between the hub and the drive spindle.

2. A hub as claimed in claim 1, wherein said at least one spring-biassed tooth (11, 15, 18, 22, 27, 32, 35, 38, 43, 51) has a spring rate of from about 10 N/m to 400 N/m (1 pond/mm to 40 ponds/mm).

3. A hub as claimed in claim 1 or 2, wherein immovable teeth (8) alternate with spring-biassed teeth (11, 15, 18, 22), there being provided in particular three immovable teeth (8) and three spring-biassed teeth (11, 15, 18, 22) (Figs. 1 to 4).

4. A hub as claimed in claim 1 or 2, wherein four immovable teeth (25) and two spring-biassed teeth (27, 32) are provided (Figs. 6 and 6A).

5. A hub as claimed in claim 1 or 2, wherein two immovable teeth (25) and four spring-biassed teeth (35, 38, 43) are provided (Figs. 7 to 10).

6. A hub as claimed in any of claims 1 to 5, wherein the movable teeth (11, 15, 18, 22) include springs (10, 16, 19, 23) which are effective in the horizontal plane of the hub (5, 13, 17, 21) (Figs. 1 to 4).

7. A hub as claimed in any of claims 1 to 6, wherein the spring-biassed teeth (18, 22) include springs (19, 23) which are effective in the axial direction of the hub (17, 21) (Figs. 1 to 4).

8. A hub as claimed in any of claims 1 to 3 and 5 to 7, wherein the movable spring-biassed teeth (11, 15, 18, 22) are arranged symmetrically with respect to the axis of rotation of the hub (5, 13, 17, 21) and there are at least three such teeth.

9. A hub as claimed in one or more of claims 1 to 8, wherein the travel of an individual movable spring-biassed tooth or the total travel of two diametrically opposed movable spring-biassed teeth (27, 32, 35, 38, 43 51) is from about 0.6 to 0.8 mm (Figs. 6 to 11).

10. A hub as claimed in any of claims 1 to 9, wherein at least two movable spring-biassed teeth (32, 35) are provided on a common support (33, 36) which is spring-loaded against the ring member (26) (Figs. 6A and 7).

11. A hub as claimed in any of claims 1 to 10, wherein two spring-biassed teeth (51) are provided on each member (50) which is pivotable relative to the ring member (26) (Fig. 11).

12. A hub as claimed in any of claims 1 to 11, wherein the hub consists of an outer part and at least one inner part (33, 36, 39, 44, 47, 50) provided with the spring-biassed teeth (32, 35, 38, 45, 50), which outer and inner parts can be coupled to one another and between which there is play after coupling (Figs. 6A to 11).

13. A hub as claimed in claim 12, wherein the immovable teeth (25) are arranged on the outer part, and the spring-biassed teeth (32, 35, 38, 43, 50) are arranged on an inner part (33, 36, 39, 44, 47, 50) which is spring-loaded against the ring member (26) (Figs. 6A to 11).

14. A magnetic tape cassette, especially a compact cassette, for a recorder in which the compact cassette is operated in a vertical position, the cassette including at least one hub comprising a ring member (7) on whose inner periphery there are arranged teeth (8, 25) which are immovable in the radial direction, for driving engagement by projecting keys (29) on a least one recorder-associated drive spindle (28), and onto and from whose outer periphery the magnetic tape can be wound and unwound, wherein there are provided on each hub, in addition to the immovable teeth (8, 25), spring-biassed teeth (11, 15, 18, 22, 27, 32, 35, 38, 43, 51) which are movable in the radial direction or in the radial and axial directions and which, regardless of the direction of rotation, constantly exert radial or both axial and radial pressures on the drive spindle (28) so as to reduce the play between the hub and the drive spindle.

15. A magnetic tape cassette as claimed in claim 14, wherein the movable spring-biassed tooth (11, 15, 18, 22, 27, 32, 35, 38, 43, 51) has a spring rate of from about 10 N/m to 400 N/m (1 pond/mm to 40 ponds/mm).

16. A magnetic tape cassette as claimed in claim 14 or 15, wherein the travel of an individual movable tooth or the total travel of two diametrically opposed movable teeth (27, 32, 35, 38, 43, 51) is from about 0.6 to about 0.8 mm.

## Revendications

1. Noyau d'enroulement pour cassettes de bande magnétique, en particulier pour cassettes compactes, constitué d'une partie annulaire (7), sur la périphérie intérieure de laquelle sont prévus des tenons d'entraînement (8, 25) immobiles en direction radiale, pour coopérer en rotation avec des nervures externes (29) à la périphérie d'une broche d'entraînement (28), et sur la périphérie extérieure de laquelle le rouleau de bande magnétique peut s'enrouler et se dérouler, caractérisé par le fait qu'en plus des tenons d'entraînement (8, 25) immobiles sont prévus des tenons d'entraînement (11, 15, 18, 22, 27, 32, 35, 38, 43, 51) mobiles en direction radiale ou en directions axiale et radiale, et rappelés élastiquement, qui exercent en permanence sur la périphérie de la broche d'entraînement (28) des efforts de poussée radiaux et axiaux et radiaux, indépendants du sens de rotation, pour réduire le jeu entre noyau d'enroulement et broche d'entraînement.

2. Noyau d'enroulement selon la revendication 1, caractérisé par le fait que l'un au moins des tenons d'entraînement rappelés élastiquement (11, 15, 18, 22, 27, 32, 35, 38, 43, 51) possède une constante d'élasticité comprise entre environ 10 N/m à 400 N/m (1 gf/mm à 40 gf/mm).

3. Noyau d'enroulement selon les revendications 1 ou 2, caractérisé par le fait que sont prévus, chaque fois, alternativement, un tenon d'entraînement immobile (8) et un tenon d'entraînement rappelé élastiquement (11, 15, 18, 22) et, notamment, trois tenons immobiles (8) et trois tenons élastiques (11, 15, 18, 22) (fig. 1 à 4).

4. Noyau d'enroulement selon les revendications 1 ou 2, caractérisé par le fait que sont prévus quatre tenons immobiles (25) et deux tenons élastiques (27, 32) (fig. 6, 6A).

5. Noyau d'enroulement selon les revendications 1 ou 2, caractérisé par le fait que sont prévus deux tenons d'entraînement immobiles (25) et quatre tenons d'entraînement élastiques (35, 38, 43) (fig. 7 à 10).

6. Noyau d'enroulement selon l'une des revendications 1 à 5, caractérisé par le fait que les tenons d'entraînement mobiles (11, 15, 18, 22) comportent des ressorts (10, 16, 19, 23) s'étendant dans le plan horizontal du noyau d'enroulement (5, 13, 17, 21) (fig. 1 à 4).

7. Noyau d'enroulement selon l'une des revendications 1 à 6, caractérisé par le fait que les tenons d'entraînement à rappel élastique (18, 22) comportent des ressorts (19, 23) mobiles en direction axiale par rapport au noyau d'enroulement (17, 21) (fig. 3 et 4).

8. Noyau d'enroulement selon l'une des revendications 1 à 3 et 5 à 7, caractérisé par le fait que les tenons d'entraînement mobiles à rappel élastique (11, 15, 18, 22) sont disposés symétriquement par rapport au centre du noyau (5, 13, 17, 21) et ils sont en nombre de trois au moins.

9. Noyau d'enroulement selon l'une des revendications 1 à 8, caractérisé par le fait que la course élastique d'un seul tenon d'entraînement (27, 32, 35, 38, 43, 51) mobile, à rappel élastique, ou de deux tenons opposés diagonalement, s'élève au total à environ 0,6 à 0,8 mm (fig. 6 à 11).

10. Noyau d'enroulement selon l'une des revendications 1 à 9, caractérisé par le fait qu'au moins deux tenons d'entraînement mobiles, à rappel élastique (32, 35) sont prévus sur un support commun (33, 36) qui est monté élastiquement par rapport à la partie annulaire (26) (fig. 6A, 7).

11. Noyau d'enroulement selon l'une des revendications 1 à 10, caractérisé par le fait que deux tenons d'entraînement à rappel élastique (51) sont prévus sur une partie pivotante (50) qui peut pivoter par rapport à la partie annulaire 26 (fig. 11).

12. Noyau d'enroulement selon l'une des revendications 1 à 11, caractérisé par le fait que le noyau d'enroulement est constitué par une partie externe et au moins une partie interne (33, 36, 39, 44, 47, 50) munie des tenons d'entraînement élastique (32, 35, 38, 43, 51), les parties externe et interne étant accouplables l'une avec l'autre et entre lesquelles un jeu subsiste après accouplement (fig. 6A-11).

13. Noyau d'enroulement selon la revendication 12, caractérisé par le fait que les tenons d'entraînement immobiles (25) sont prévus sur la partie externe, et les tenons d'entraînement élastiques (32, 35, 38, 43, 51) sont prévus sur une partie interne (33, 36, 39, 44, 47, 50) montée élastiquement par rapport à la partie annulaire (26) (fig. 6A-11).

14. Cassette pour bande magnétique, en particulier cassette compacte, pour appareil dans lequel la cassette compacte fonctionne en position verticale, la cassette comprenant au moins un noyau d'enroulement constitué d'une partie annulaire (7), sur la périphérie intérieure de laquelle sont prévus des tenons d'entraînement (8, 25) immobiles en direction radiale, pour coopérer en rotation avec des nervures externes (29) à la périphérie d'au moins une broche d'entraînement (28) côté appareil, et sur la périphérie extérieure de laquelle le rouleau de bande magnétique peut s'enrouler et se dérouler, caractérisé par le fait que chaque noyau d'enroulement comprend, en plus des tenons d'entraînement (8, 25) immobiles, des tenons d'entraînement (11, 15, 18, 22, 17, 32, 35, 38, 43, 51) mobiles en direction radiale ou en directions axiale et radiale, et rappelés élastiquement, qui exercent en permanence sur la périphérie de la broche d'entraînement (28) des efforts de poussée radiaux ou axiaux et radiaux, indépendants du sens de rotation, pour réduire le jeu entre noyau d'enroulement et broche d'entraînement.

15. Cassette de bande magnétique selon la revendication 14, caractérisée par une constante élasticité du tenon d'entraînement mobile élastiquement (11, 15, 18, 22, 27, 32, 35, 38, 43, 51) comprise entre environ 10 N/m et 400 N/m (1 gf/mm à 40 gf/mm).

16. Cassette de bande magnétique selon la revendication 14 ou 15, caractérisée par le fait que la course élastique d'un seul tenon d'entraînement (27, 32, 35, 38, 43, 51) mobile, à rappel élastique, ou de deux tenons opposés diagonalement, s'élève au total à environ 0,6 à 0,8 mm.

FIG.1

FIG.2

FIG.3

FIG.4

G%

FIG.5A

T

G %

FIG.5B

T

FIG.6

FIG.6A

FIG. 7

FIG. 8

FIG.9

FIG.10

FIG.11